# EUROPEAN PATENT SPECIFICATION

(11) **EP 1 562 788 B1**
(45) Date of publication and mention of the grant of the patent: **17.09.2014**
(21) Application number: 03777858.6
(22) Date of filing: 24.10.2003
(51) Int. Cl.: B60R 13/08, B62D 25/00, B62D 25/16

(54) **UNIVERSAL PHYSICAL BARRIER**
UNIVERSELLE PHYSIKALISCHE DICHTUNGSSPERRE
BARRIERE MATERIELLE UNIVERSELLE

(30) Priority: 08.11.2002 US 290892
(43) Date of publication of application: 17.08.2005
(73) Proprietor: Sika Technology AG, 6340 Baar (CH)
(72) Inventor: ROBERTS, Steven, Sterling Heights, MI 48313 (US); LJUBEVSKI, Pero, Canton, MI 48187 (US)
(74) Representative: Sika Patent Attorneys
(86) International application number: PCT/US2003/033722
(87) International publication number: WO 2004/043743

(56) References cited:
- EP-A- 1 031 496
- US-B1- 6 358 584
- US-B1- 6 412 852
- PATENT ABSTRACTS OF JAPAN vol. 2000, no. 13, 5 February 2001 (2001-02-05) -& JP 2000 271934 A (NEOEX LAB INC), 3 October 2000 (2000-10-03)

## Description

### FIELD OF THE INVENTION

This invention relates to a multi-plane physical barrier for sealing orifices and cavities.

### BACKGROUND OF THE INVENTION

Physical barriers are commonly used to seal orifices in certain objects, such as panel members in motor vehicles, buildings, household appliances, etc. These barriers normally are used to prevent physical materials, fluids, and gases, such as environmental contaminants, fumes, dirt, dust, moisture, water, etc., from passing through the orifice or cavity. For example, an automotive panel, such as a door panel, typically has several small orifices in the sheet metal, which are created for various reasons during manufacturing. Further, various structural components of automobile bodies have a variety of orifices, hollow posts, cavities, passages and openings that can allow contaminants from the engine and the roadway into the passenger compartment. These holes, orifices, and cavities are typically barricaded with duct tape, butyl-based plastic patches, and sealing plugs made from foam, rubber or some other material. Another known physical barrier for cavities involves introducing a foam product into the cavity, and using a fiberglass matting to fill in the cavity.

One known type of physical barrier is comprised of a sealer material disposed on a carrier device. The carrier device is generally manufactured from a rigid material, such as hard plastic, such that its shape approximates the shape of the orifice to be sealed. The carrier/sealer combination is configured such that the carrier is inserted into/onto an orifice, and the sealer material creates an airtight seal between the carrier and the edges of the orifice. Typically, the sealer material is activated (thermally or chemically) shortly before or after insertion into the orifice so that the sealer material forms a seal around the edges of the orifice. JP2000271934A discloses a different type of physical barrier with two holder plates that are connected by a hinge. In-between the holder plates a foaming base material is arranged.

Orifices and cavities that require sealing come in a variety of shapes and sizes. Some orifices, such as holes in a piece of sheet metal, are essentially planar (two-dimensional). For these types of two-dimensional orifices, a simple planar carrier can be used to fill the orifice. On the other hand, some orifices, such as certain cavities or orifices that extend around sheet metal corners, for example, are three-dimensional in nature. Three-dimensional orifices or cavities can be sealed by using two or more planar carriers. Moreover, it is also known to use a single multi-planar physical barrier, wherein the carrier is molded into a relatively rigid multi-planar shape so as to match the shape of the orifice.

While rigid multi-planar barriers can be effective for sealing three-dimensional orifices and cavities, they are relatively difficult and costly to manufacture and stock. For instance, because the same shaped orifice may be present in different places on a product (such as a vehicle), many multi-plane barriers require both a "right-hand" and a "left-hand" version. As a result, each multi-plane barrier shape requires two different molds and other tooling for manufacturing. This orientation issue is particularly problematic in the automotive industry because cars inherently have a right and left side. Thus, the cost of every aspect of multi-plane barrier manufacturing is twice that of comparable single-plane barrier. Further, relatively complex manufacturing processes are required to manufacture rigid multi-planar carriers. Finally, increased costs resulting from stocking two versions of each multi-planar barrier and increased costs from having two versions of each shipping package for each multi-planar barrier are both undesirable consequences of multi-planar barriers.

Consequently, the inventors have recognized the need for multi-planar physical barriers that are quicker, easier and more economical to manufacture, as well as being more economical to package, ship and install.

### BRIEF DESCRIPTION OF THE DRAWINGS

In the drawings:
Figure 1 shows a cut away view of a physical barrier in a multi-plane configuration installed in a panel member according to an embodiment of the invention.
Figure 2 shows a perspective view of a carrier in a multi-plane configuration according to an embodiment of the invention.
Figure 3 shows a perspective view of a physical barrier in a multi-plane configuration according to an embodiment of the invention.
Figure 4 shows a perspective view of a carrier in a single-plane configuration according to an embodiment of the invention.
Figure 5 shows an end view of a carrier in a multi-plane configuration according to an embodiment of the invention.

### DETAILED DESCRIPTION

The present invention includes a three-dimensional or multi-plane physical barrier that is capable of being manufactured, packaged and shipped as a single-plane physical barrier and that is "universal" or "orientation independent." In effect, the inventive barrier comprises two or more relatively rigid single-plane carriers that are flexibly connected together at their respective edges by a "hinge." In this way, the inventive barrier can be manufactured, shipped and stored as a single-plane barrier, and, at the time of installation, it can be "opened" into a multi-plane barrier. Because of the flexible connection, the same multi-plane barrier of the inventive design can be given either a right-handed or a left-handed orientation, depending on the requirements of the orifice to be sealed.

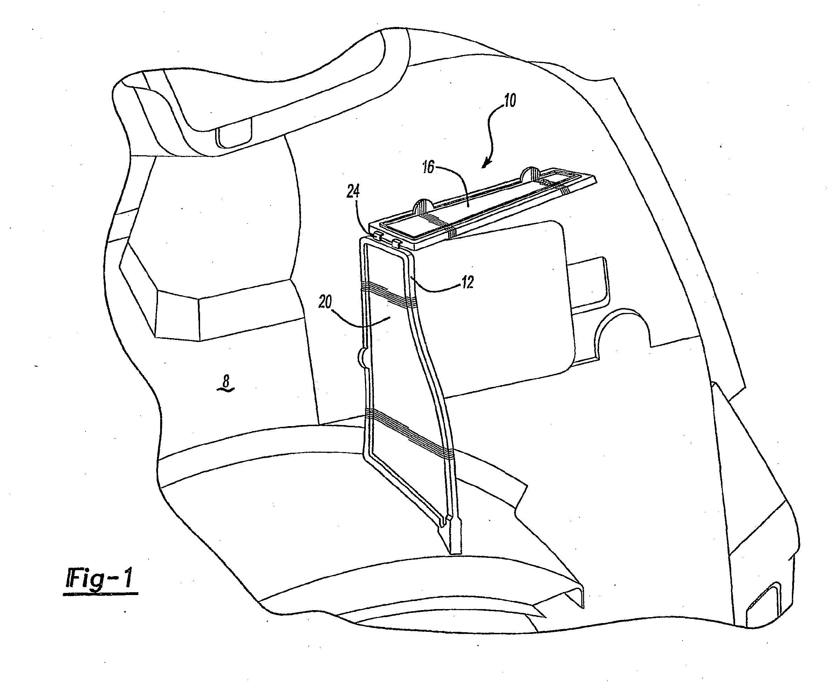

Figure 1 shows a panel member 8, which, together with another panel member (not shown), creates a cavity in an automobile structural component. In this example, the cavity is located in the fender of the automobile. In order to prevent water, dirt, noise and other contaminants from entering the automobile through the fender, it is desirable to block the cavity. A physical barrier is used to block and seal the cavity, thereby creating a protected area of the cavity where water, dirt, etc. cannot enter. As seen in Figure 1, a multi-plane physical barrier 10 includes a first carrier 16, a second carrier 20, and a sealer material 12 disposed thereon. The first carrier 16 is flexibly connected to the second carrier 20 by a hinge 24 such that first carrier 16 and second carrier 20 can be rotated relative to each other. The multi-plane physical barrier 10 is configured to be applied to the cavity formed in the panel member 8 by adjusting the relative positioning of first carrier 16 and second carrier 20. In this way, the barrier 10 can be made to be flat (i.e., essentially planar) for purposes of packaging, shipping, and storing, and the barrier 10 can be converted into a multi-plane barrier for installation. Further, because the hinge 24 allows the physical barrier to be given either a right or left-handed orientation, the need to manufacture both right-handed and left-handed versions of the same multi-plane barrier is eliminated.

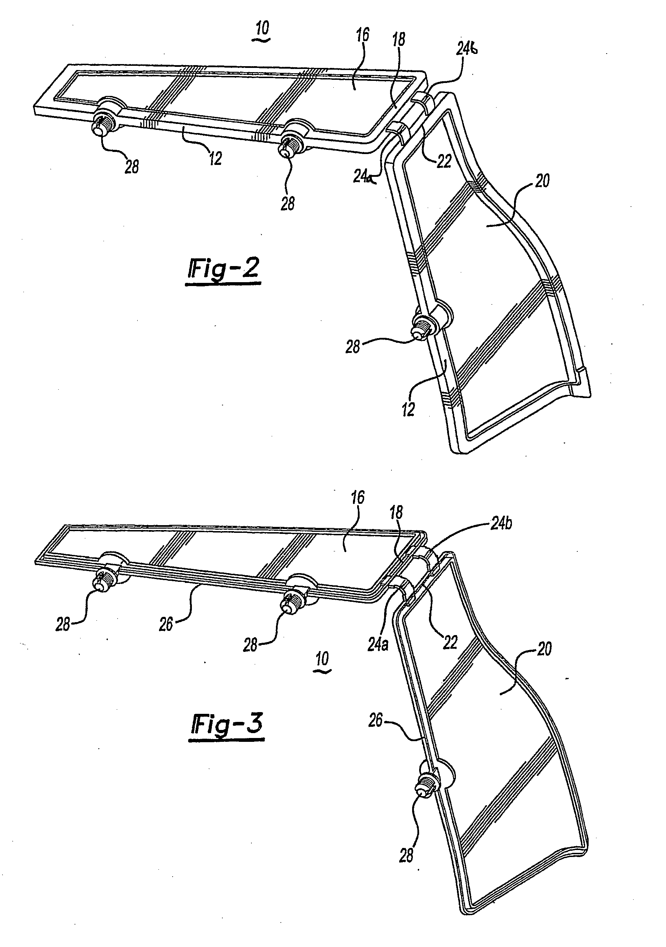

Figure 2 illustrates a more detailed view of the inventive multi-plane physical barrier 10. The physical barrier 10 includes first and second carriers 16 and 20 connected together at their respective joined edges 18 and 22 by hinge 24. Optional securing pins 28 are positioned around the outer edges of the first and second carriers 16 and 20 to secure the barrier 10 into the orifice or cavity upon installation. A sealer material 12 is preferably disposed around the outer circumference of each of the carriers 16 and 20. Figure 3 illustrates
an embodiment of the invention that is the same as that illustrated in Figure 2, except that Figure 3 shows an embodiment that does not include sealer material 12.

When used, the sealer material 12 may be any known sealing material, but preferably is one that expands upon activation (e.g., thermal or chemical activation), although non-expanding sealer materials are also suitable. One useful type of expandable material is a heat-activated foam. While a heat activated foam is preferred, it is to be understood that the invention may be practiced with other types of foams that are, for example, chemically activated. Preferred sealer materials include those described in U.S. Patent Nos. 5,266,133, 6,150,428, 6,368,438 and 6,387,470. Though the sealer 12 is shown in Figure 2 as being disposed on the outer edges of carriers 16 and 20, the sealer material 12 may be placed on the carriers in any known manner.

The individual planar carriers 16 and 20 of the inventive barrier 10 generally have a size and shape that is dictated by the size and shape of the cavity or orifice into which the barrier is to be inserted. The carriers 16 and 20 may be made from a variety of conventional materials, though it is preferable that the carrier material be resistant to the means of activating the sealer material. For example, it is desirable that the carrier material have a relatively high melt temperature if used in conjunction with a sealer material that is heat-activated. While metals may be used for the carriers and hinges, plastics are preferred because of the reduced weight and reduced amount of force needed to install a plastic carrier as compared to a metal carrier. One useful plastic material is nylon.

Hinge 24 is preferably configured so as to allow planar carriers 16 and 20 to rotate relative to each other. Accordingly, the hinge 24 should have a certain degree of flexibility. Further, the hinge 24 is preferably reversibly actuatable; that is, when pressure is applied to the carriers 16 and 20, the hinge 24 actuates, and when the pressure is released, the hinge 24 returns to its original position. "Actuate-and-hold" hinges - hinges that do not return to their original position when the applied pressure is released - may also suitable. Like the carriers 16 and 20, the hinge 24 should be made from a material that is resistant to the means of activating the sealer material 12.

The particular hinge 24 illustrated in Figures 2 and 3 comprises relatively thin strips of flexible material 24a and 24b. If the hinge strips 24a and 24b are made from the same material as the carriers, then the hinge strips should be of a thinner profile than the carriers to provide the desired flexibility in the hinge. Alternatively, the hinge strips may be of the same material and thickness as the carriers 16 and 20, but lack certain rigidity enhancing elements present in/on the carriers 16 and 20, such as thick rigid beads disposed on one side of the carriers. The hinge strips 24a and 24b in Figures 2 and 3 are shown as being separate components that are connected and secured between carriers 16 and 20 by tabs that snap into holes in the carriers. However, the hinge strips could also be integrally formed with the carriers 16 and 20 during manufacture, thereby eliminating the need for any particular connection means. Moreover, the hinge strips 24a and 24b may actually be a single hinge strip that runs the entire length of the interface between edges 18 and 22. In light of the disclosure, one skilled in the art will recognize many variations of the hinge 24 that can be used in the inventive barrier.

In addition to that shown in Figures 2 and 3, the hinge 24 may take a variety of forms and operate in different ways, provided that it permits the carriers 16 and 20 to rotate relative to each other. For example, in addition to the flexible "bending" type of hinge shown in Figures 2 and 3, the hinge may be a common "rotating" hinge (as used on most doors) or a "ball and socket" hinge. Moreover, the hinge 24 may be manufactured as a separate component from the carriers 16 and 20, or it may be manufactured integral or partially integral to the carriers 16 and 20. When manufactured as a separate component, hinge 24 may be connected to the separate carriers 16 and 20 via any suitable connection method, including fasteners and adhesives. When manufactured integral to the carriers 16 and 20, the hinge 24 and the carriers can be created from a single mold. When manufactured partially integral to the carriers 16 and 20 - for example, a "ball and socket" type hinge - one carrier 16 can be manufactured integral with one portion of the hinge (e.g., the "ball") and the other carrier 20 can be manufactured integral with the other portion of the hinge (e.g., the "socket"). When assembled, the "ball" and "socket" of the respective carriers function together to form a hinge.

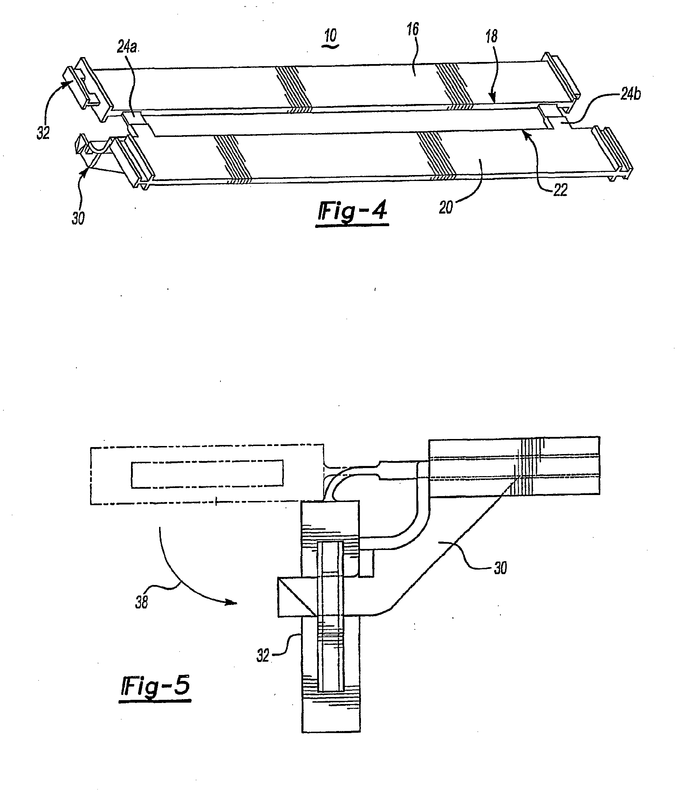

Figure 4 illustrates another embodiment of the invention, which discloses some additional variations and optional features of the inventive barrier. Components in Figure 4 that are similar to components in Figures 2 and 3 bear the same reference numerals. In the embodiment shown in Figure 4, the carriers 16 and 20 are connected by hinge 24, which, as in the embodiment shown in Figures 2 and 3, comprises two hinge strips 24a and 24b. Unlike Figures 2 and 3, though, the embodiment of Figure 4 includes components used to "lock" the two planar carriers 16 and 20 in place relative to each other during installation. This feature is desirable in certain applications, particularly where the adhering tendency of the unactivated sealer material 12, if used, is not sufficient to maintain the barrier in place against the spring force of the hinge 24. The "locking" feature of Figure 4 can be accomplished by the combination of a male locking member 30 and a female locking member 32, which are configured to engage each other to maintain the relative positioning of the planar carriers 16 and 20. In Figure 4, the male and female locking members 30 and 32 establish a "snap lock" when the male locking member 30 is inserted into the female locking member 32.

Figure 5 illustrates an end view of the embodiment of the barrier shown in Figure 4 to illustrate the "locking" feature described above. When the carriers 16 and 20 are rotated toward each other (shown by arrow 38), the male locking member 30 is inserted into the female locking member 32. The engagement of the two locking members 30 and 32 holds the two carriers 16 and 20 in place relative to each other, even though the hinge 24 is reversibly actuatable.

The application of the inventive physical barrier 10 will now be described. As indicated, the physical barrier 10 can be manufactured in a variety of ways, including wherein the carriers 16 and 20 and the hinge 24 are all integral, or wherein the carriers 16 and 20 are separate components from the hinge 24. For example, barrier 10 can be manufactured using a single mold wherein carriers 16 and 20 are aligned in a co-planar fashion during manufacture. In any event, it is preferable that the barrier 10 be manufactured such that it can be easily stored in a flat configuration (as shown in Figure 4) so that it is approximately planar. A planar orientation of the barrier 10 makes the packaging and shipping tasks easier. The sealer material 12, if used, may be applied to the carriers 16 and 20 either before or after the barrier 10 is shipped to the end user. If the sealing material is applied to the carriers prior to shipping, the installation process is simplified.

The end user installs the barrier 10. First, the user adjusts the relative positions of the carriers 16 and 20 so as to match the shape of the three-dimensional space of the orifice or cavity to seal. Actuating the hinge 24 in one direction forms a multi-plane barrier with one orientation (e.g., "right-handed" orientation), whereas actuating the hinge 24 in the other direction forms a multi-plane barrier with the opposition orientation (e.g., "left-hand" orientation). If used, a locking device can maintain the relative position of the carriers after being set. Then, the barrier 10 is applied to or on an orifice or cavity. The barrier 10 can be maintained in position relative to the orifice or cavity by friction, by the sealing material 12, or by securing pins 28 (Figures 2 and 3). The carriers 16 and 20 block most of the open space of the orifice or cavity, and any additional space, particularly around the edges of the carriers 16 and 20, including any gap near the hinge 24, is filled by the sealing material 12 after it is activated. After being activated, the sealing material 12 permanently holds the barrier 10 in place relative to the orifice or cavity.

Many variations of the illustrated preferred embodiments are contemplated to be included in the scope of the present invention. For example, while specifically shown with only two carriers, one skilled in the art will recognize that a barrier with any number of carriers may be utilized to form barriers having any number of planes. Further, while certain of the advantages of the invention are realized best if the carriers are flat, multi-dimensional carriers may also be connected together by a hinge and remain within the scope of this invention.

## Claims

1. A physical barrier (10) comprising:
a first carrier (16) adapted to be applied to an opening of a three dimensional orifice and cavity in a panel member (8) of a vehicle;
a second carrier (20) adapted to be applied to an opening in a panel member (8); and
a hinge (24) connecting said first and second carriers,
**characterized in that** by actuating the hinge (24) the two carriers (16, 20) can have left hand or right hand orientation respectively adapted to the left and right side of said vehicle, and
that said physical barrier (10) is converted into a multi-plane barrier for installation.

2. The physical barrier of claim 1, further comprising a sealer material (12) disposed on at least one of said first and second carriers.

3. The physical barrier of claim 1, wherein said carriers are co-planar relative to each other at the time of manufacture.

4. The physical barrier of claim 1, wherein said hinge is integral to said first and second carriers.

5. The physical barrier of claim 1, wherein said hinge is made of the same material as said first and second carriers.

6. The physical barrier of claim 1, wherein said hinge has a thickness less than a thickness of said first and second carriers.

7. The physical barrier of claim 1, wherein said hinge includes a securing tab.

8. The physical barrier of claim 1, wherein said hinge is a bending hinge, in particular said bending hinge comprises at least one flexible hinge strip that connects said first and second carriers.

9. The physical barrier of claim 1, wherein said hinge is a ball and socket hinge or wherein said hinge is a twisting hinge or wherein said hinge is a reversibly actuatable hinge.

10. The physical barrier of claim 1, further including a locking device configured to secure the respective positions of said first and second carriers relative to each other.

11. The physical barrier of claim 2, wherein the physical barrier seals an opening of the panel member (8), in particular a cavity in an automobile structural component.

12. A method of manufacturing a physical barrier (10) according to claim 1, comprising:
providing a substantially flat first carrier (16) and a substantially flat second carrier (20); and
connecting said first and second carriers with a hinge (24),
said first and second carriers are capable of being positioned such that the carriers (16, 20) are co-planar relative to each other;
**characterized in that** actuating the hinge (24) in one direction forms a multi-plane barrier with one orientation and actuating the hinge (24) in the other direction forms a multi-plane barrier with the opposition orientation, so that the installed barrier (10) is converted into a multi-plane barrier.

13. The method of claim 12, wherein said providing step and said connecting step occur substantially simultaneously.

14. The method of claim 12, wherein said providing step includes molding the first and second carriers.

15. The method of claim 12, further comprising:
providing a sealer material (12) disposed on the first carrier and on the second carrier.

## Patentansprüche

1. Physikalische Dichtungssperre (10), umfassend:
einen ersten Träger (16), der ausgebildet ist, um an einer Öffnung eines dreidimensionalen Durchgangs und eines Hohlraums eines Fahrzeugs in einem Karosserieteil (8) angebracht zu werden;
einen zweiten Träger (20), der ausgebildet ist, um an einer Öffnung in einem Karosserieteil (8) angebracht zu werden; und
ein Scharnier (24), das den ersten und zweiten Träger verbindet,
**dadurch gekennzeichnet, dass** durch Betätigen des Scharniers (24) die beiden Träger (16, 20) eine linke oder rechte Orientierung aufweisen können, die jeweils an die linke und rechte Seite des Fahrzeugs angepasst sind,
und dass die physikalische Dichtungssperre (10) in eine mehrschichtige Dichtungssperre zur Installation umgewandelt wird,

2. Physikalische Dichtungssperre nach Anspruch 1, ferner umfassend ein Dichtungsmaterial (12), das auf mindestens einem von dem ersten und dem zweiten Träger angeordnet ist.

3. Physikalische Dichtungssperre nach Anspruch 1, wobei die Träger bei der Herstellung zueinander coplanar sind.

4. Physikalische Dichtungssperre nach Anspruch 1, wobei das Scharnier einstückig mit dem ersten und zweiten Träger ausgebildet ist.

5. Physikalische Dichtungssperre nach Anspruch 1, wobei das Scharnier aus dem gleichen Material wie der erste und der zweite Träger gefertigt ist.

6. Physikalische Dichtungssperre nach Anspruch 1, wobei das Scharnier eine Dicke aufweist, die geringer als eine Dicke des ersten und des zweiten Trägers ist.

7. Physikalische Dichtungssperre nach Anspruch 1, wobei das Scharnier eine Befestigungslasche umfasst.

8. Physikalische Dichtungssperre nach Anspruch 1, wobei das Scharnier ein Biegescharnier ist, insbesondere umfasst das Biegescharnier mindestens einen flexiblen Scharnierstreifen umfasst, der den ersten und den zweiten Träger verbindet.

9. Physikalische Dichtungssperre nach Anspruch 1, wobei das Scharnier ein Kugelscharnier ist, oder wobei das Scharnier ein Drehscharnier oder wobei das Scharnier ein reversibel betätigbares Scharnier ist.

10. Physikalische Dichtungssperre nach Anspruch 1, ferner umfassend eine Verriegelungsvorrichtung, die konfiguriert ist, um die jeweiligen Positionen des ersten und des zweiten Trägers relativ zueinander zu sichern.

11. Physikalische Dichtungssperre nach Anspruch 2, wobei die physikalische Dichtungssperre eine öffnung eines Karosserieteils (8) abdichtet, insbesondere einen Hohlraum in einer Strukturkomponente eines Automobils.

12. Verfahren zur Herstellung einer physikalischen Dichtungssperre(10) nach Anspruch 1, umfassend:
Bereitstellen eines im Wesentlichen flachen ersten Trägers (16) und eines zweiten im Wesentlichen flachen Trägers (20); und
Verbinden des ersten und des zweiten Trägers mit einem Scharnier (24),
wobei der erste und der zweite Träger so positioniert werden können, dass die Träger (16, 20) zueinander coplanar sind;
**dadurch gekennzeichnet, dass** Betätigen des Scharniers (24) in eine Dichtung eine mehrschichtige Dichtungssperre mit einer Orientierung bildet und Betätigen des Scharniers (24) in die andere Richtung eine mehrschichtige Dichtungssperre mit einer entgegengesetzten Orientierung bildet, so dass die installierte Dichtungssperre(10) in eine mehrschichtige Dichtungssperre umgewandelt wird.

13. Verfahren nach Anspruch 12, wobei der Bereitstellungsschritt und der Verbindungsschritt im Wesentlichen gleichzeitig stattfinden.

14. Verfahren nach Anspruch 12, wobei der Bereitstellungsschritt das Formgeben des ersten und zweiten Trägers umfasst.

15. Verfahren nach Anspruch 12, ferner umfassend:
Bereitstellen eines Dichtungsmaterials (12), das auf dem ersten Träger und auf dem zweiten Träger angeordnet ist.

## Revendications

1. Barrière matérielle (10) comprenant :
un premier support (16) adapté pour être appliqué dans une ouverture d'un orifice tridimensionnels et dans une cavité d'un élément (8) de panneau d'un véhicule ;
un deuxième support (20) adapté pour être appliqué dans une ouverture d'un élément (8) de panneau ; et
une articulation (24) reliant lesdits premier et deuxième supports,
**caractérisée en ce qu'**en actionnant l'articulation (24), les deux supports (16, 20) peuvent avoir une orientation vers la gauche ou vers la droite adaptée respectivement au côté gauche et au côté droit dudit véhicule, et **en ce que**; et
ladite barrière matérielle (10) est convertie en une barrière multiplans pour l'installation.

2. Barrière matérielle selon la revendication 1, comprenant en outre un matériau (12) d'étanchéité disposé sur au moins l'un desdits premier et deuxième supports.

3. Barrière matérielle selon la revendication 1, dans laquelle lesdits supports sont coplanaires l'un par rapport à l'autre au moment de la fabrication.

4. Barrière matérielle selon la revendication 1, dans laquelle ladite articulation fait partie intégrante desdits premier et deuxième supports.

5. Barrière matérielle selon la revendication 1, dans laquelle ladite articulation est réalisée dans le même matériau que lesdits premier et deuxième supports.

6. Barrière matérielle selon la revendication 1, dans laquelle ladite articulation a une épaisseur inférieure auxdits premier et deuxième supports.

7. Barrière matérielle selon la revendication 1, dans laquelle ladite articulation comprend un ergot de blocage.

8. Barrière matérielle selon la revendication 1, dans laquelle ladite articulation est une articulation pliante ; en particulier ladite articulation pliante comprend au moins une bande articulée flexible qui relie lesdits premier et deuxième supports.

9. Barrière matérielle selon la revendication 1, dans laquelle ladite articulation est une charnière à rotule ou dans laquelle ladite articulation est une articulation de torsion ou dans laquelle ladite articulation est une articulation pouvant être actionnée de façon réversible.

10. Barrière matérielle selon la revendication 1, comprenant en outre un dispositif de verrouillage configuré pour bloquer les positions respectives desdits premier et deuxième supports l'un par rapport à l'autre.

11. Barrière matérielle selon la revendication 2, dans laquelle la barrière matérielle ferme hermétiquement une ouverture de l'élément (8) de panneau, en particulier une cavité dans un composant structurel d'automobile.

12. Procédé de fabrication d'une barrière matérielle (10) selon la revendication 1, comprenant :
la réalisation d'un premier support (16) sensiblement plat et d'un deuxième support (20) sensiblement plat ; et
le raccordement desdits premier et deuxième supports à l'aide d'une articulation (24),
lesdits premier et deuxième supports pouvant être positionnés de telle sorte que les supports (16, 20) soient coplanaires l'un par rapport à l'autre ;
procédé **caractérisé en ce que** l'actionnement de l'articulation (24) dans une direction forme une barrière multiplans avec une orientation et l'actionnement de l'articulation (24) dans l'autre direction forme une barrière multiplans avec l'orientation opposée, de telle sorte que la barrière installée (10) est convertie en une barrière multiplans.

13. Procédé selon la revendication 12, dans lequel ladite étape de réalisation et ladite étape de raccordement ont lieu sensiblement en même temps.

14. Procédé selon la revendication 12, dans lequel ladite étape de réalisation inclut le moulage des premier et deuxième supports.

15. Procédé selon la revendication 12, comprenant en outre :
la réalisation d'un matériau (12) d'étanchéité disposé sur le premier support et sur le deuxième support.
